# EUROPÄISCHE PATENTANMELDUNG

(11) **EP 2 570 397 A2**
(43) Veröffentlichungstag der Anmeldung: **20.03.2013**
(21) Anmeldenummer: 12184713.1
(22) Anmeldetag: 17.09.2012
(51) Int. Cl.: C04B 16/08, C04B 28/02, C04B 111/70

(54) **Spritzbeton**

(30) Priorität: 16.09.2011 DE 102011053687; 29.12.2011 DE 102011057167; 30.01.2012 DE 102012100703
(71) Anmelder: Schretter & Cie GmbH & Co. KG, 6682 Vils (AT)
(72) Erfinder: Röck, Rudolf, Dr., 6682 Vils (AT)
(74) Vertreter: Winter, Brandl, Fürniss, Hübner, Röss, Kaiser, Polte - Partnerschaft

(57) **Zusammenfassung**

Offenbart sind ein Spritzbeton und ein aus einem derartigen Spritzbeton hergestelltes Tunnelausbauelement, wobei der Spritzbeton komprimierbar ausgeführt ist. Die Komprimierbarkeit wird durch die Zugabe von Polymerschaum, vorzugsweise Polystyrol eingestellt.

## Beschreibung

Die Erfindung betrifft einen Spritzbeton gemäß dem Oberbegriff des Patentanspruches 1 und ein Tunnelausbauelement aus einem derartigen Spritzbeton.

Die Entwicklung im Tunnelneubau schreitet mit großen Schritten voran. Derzeit werden unterirdische Bauten in allen erdenklichen Gebirgsklassen aufgefahren. Die Technologie des TBM (Tunnelbohrmaschinen)-Vortriebs ist heute insbesondere bei längeren Tunnel- und Stollenbauwerken unabhängig von der Geologie ebenso einsetzbar wie es der konventionelle Vortrieb mit der so genannten "neuen österreichischen Tunnelbaumethode" (NATM) seit Jahren bewiesen hat.

Beim Auftreten von druckhaften Gebirgsverhältnissen gelten jedoch bei allen Ausbruchsmethoden spezielle Regeln und Vorgangsweisen. Abhängig von der Art und den Längen der Störzonen werden eigene Notfallpläne erstellt bzw. muss im TBM-Vortrieb die Durchörterung von Störzonen bereits im Vorfeld geplant und vorbereitet sein. Eine Nachrüstung der Maschine während der Vortriebsarbeiten im Berg ist nicht oder nur sehr schwer möglich.

Aber auch beim konventionellen Sprengvortrieb treten durch schlechte Gebirgsverhältnisse immer wieder Schwierigkeiten auf, da die ausgehärtete starre Spritzbetonschicht nicht in der Lage ist, Verformungen durch entstehenden Gebirgsdruck aufzunehmen. Die Folge sind Risse und Ablösungen der Spritzbetonschale und aufwendige Nachprofilierungen.

Um diesen Beschädigungen vorzubeugen, wurden von der Anmelderin so genannte "COMPEX"-Stauchelemente entwickelt, die im Bereich der Spritzbetonaußenschale eingebracht werden und dieser ein bestimmtes Verformungsvermögen verleihen. Diese Stauchelemente werden je nach Anwendung produziert und können auf die Hälfte ihrer ursprünglichen Größe komprimiert werden.

Ähnliche Stauchelemente sind beispielsweise in der EP 1 564 369 B1 beschrieben.

Es können auch mit Stauchelementen versehene Spritzbetonschalen eingebracht werden, wobei beispielsweise die Tunnelauskleidung zumindest zwei als Stützteile ausgeführte Auskleidungssegmente aufweist, die durch eine in Tunnellängsrichtung verlaufende Kontraktionsfuge voneinander getrennt sind. In diese Fuge sind dann die oben erläuterten Stauchelemente eingesetzt, von denen jedes zwischen einem äußeren und einem inneren Stützrohr angeordnet und stirnseitig zwischen zwei Druckübertragungsplatten eingespannt ist.

Ein Nachteil derartiger Stauchelemente ist, dass Querkräfte nur in relativ geringem Maß übertragen werden können, so dass es ebenfalls zu Schäden kommen kann.

Ähnliche Probleme sind bei einer asymmetrischen Belastung einer Tübbingauskleidung mit in den Längsfugen angeordneten Stauchelementen zu erwarten. Dabei kann es im Zuge von radialen Deformationen zu einer Translationsbewegung an der Außenseite der Tübbinge kommen, die das zur Ringspaltverfüllung verwendete Material und das anschließende Gebirge negativ beeinflusst.

Von der Anmelderin wurde das so genannte "COMPEX Support System" entwickelt, bei dem der zwischen dem Tübbingring und dem Gebirge vorhandene Ringspalt mit einem komprimierbaren Mörtel verfüllt wird. Dieser enthält einen relativ hohen Anteil an kompressiblem Polymerschaum, beispielsweise Polystyrol, so dass die Komprimierbarkeit des Mörtels im jungen Zustand mehr als 50% beträgt. Es zeigte sich, dass bei einer Ringspaltverfüllung mit diesem komprimierbaren Mörtel die Tübbingbelastung gegenüber einer Ringspaltverfüllung mit weitgehend steifem Material, wie beispielsweise Perlkies, rechnerisch um 30% niedriger ist.

Ein derartiger komprimierbarer Mörtel ist auch in der EP 1 790 624 A2 beschrieben.

Diese Ausbaumethoden haben den Nachteil gemeinsam, dass ein vergleichsweise hoher Aufwand erforderlich ist, der neben den Investitionskosten auch die Bauzeit beeinflusst.

Demgegenüber liegt der Erfindung die Aufgabe zugrunde, ein Tunnelausbauelement und einen für ein derartiges Tunnelausbauelement geeigneten Spritzbeton zu schaffen, durch die die oben genannten Nachteile ausgeräumt sind.

Diese Aufgabe wird durch einen Spritzbeton mit den Merkmalen des Patentanspruches 1 und ein Tunnelausbauelement nach dem nebengeordneten Patentanspruch 14 gelöst.

Vorteilhafte Weiterbildungen der Erfindung sind Gegenstand der Unteransprüche.

Erfindungsgemäß wird der Spritzbeton so ausgelegt, dass er eine gewisse Komprimierbarkeit aufweist. Diese Komprimierbarkeit liegt deutlich unter derjenigen des beim COMPEX-System in den Ringspalt zwischen Tübbing und Gebirge eingebrachten Mörtels. Bei diesem lag die Komprimierbarkeit im Bereich von 50%. Der erfindungsgemäße Spritzbeton wird so ausgelegt, dass die Komprimierbarkeit im Bereich zwischen 0,2% bis 20%, vorzugsweise bei etwa 5% bis 10% liegt. Es zeigte sich überraschender Weise, dass mit einem derartigen komprimierbaren Spritzbeton eine durchgängig homogene Spritzbetonschale zum Tunnelausbau verwendet werden kann, bei der auf den Einbau von Stauchelementen verzichtet werden kann oder deutlich weniger Stauchelemente als bei dem eingangs beschriebenen Verfahren eingebaut werden müssen. Durch den Entfall derartiger Stauchelemente kann die Spritzbetonschale in einem Arbeitsgang hergestellt werden, so dass die Bauzeit gegenüber den bisher bekannten Lösungen deutlich verringert werden kann.

Bei einem bevorzugten Ausführungsbeispiel der Erfindung wird die Komprimierbarkeit durch die Zugabe von Polymerschaum, vorzugsweise Polystyrol eingestellt.

Die mechanische Festigkeit und eine gewisse Duktilität der Schale ist optimiert, wenn neben den üblichen Zuschlagstoffen auch ein Anteil an Stahlfasern oder anderen Fasern (Glas, Kunststoff etc.) hinzugefügt wird. Dieser Anteil kann im Falle Stahl zwischen 10 kg/m³ und 70 kg/m³, vorzugsweise zwischen 30 kg/m³ und 40 kg/m³ liegen. Bei anderen Fasermaterialien entsprechend ihrer Dichte und Festigkeit weniger.

Die hinzu gegebenen Stahlfasern können beispielsweise 10 mm bis 70 mm, vorzugsweise zwischen 30 und 60 mm lang sein und einen Durchmesser zwischen 0,5 mm bis 1,1 mm aufweisen.

Durch Zugabe von handelsüblichen Zusatzmitteln, wie beispielsweise Beschleuniger, kann der Spritzbeton so eingestellt werden, dass die Frühfestigkeitsklasse bis J2, eine 7-Tage-Festigkeit von mindestens 10 MPa und eine 28-Tage-Normfestigkeit (gemäß Rili Spritzbeton des ÖVBB bzw. EN 12390) von mindestens 15 MPa erreicht werden kann.

Anstelle der Stahlfasern können selbstverständlich auch andere Materialien (beispielsweise alkalibeständige Glasfasern, Kunststofffasern o.Ä.) verwendet werden, um die Festigkeit und Duktilität der Schale zu verbessern.

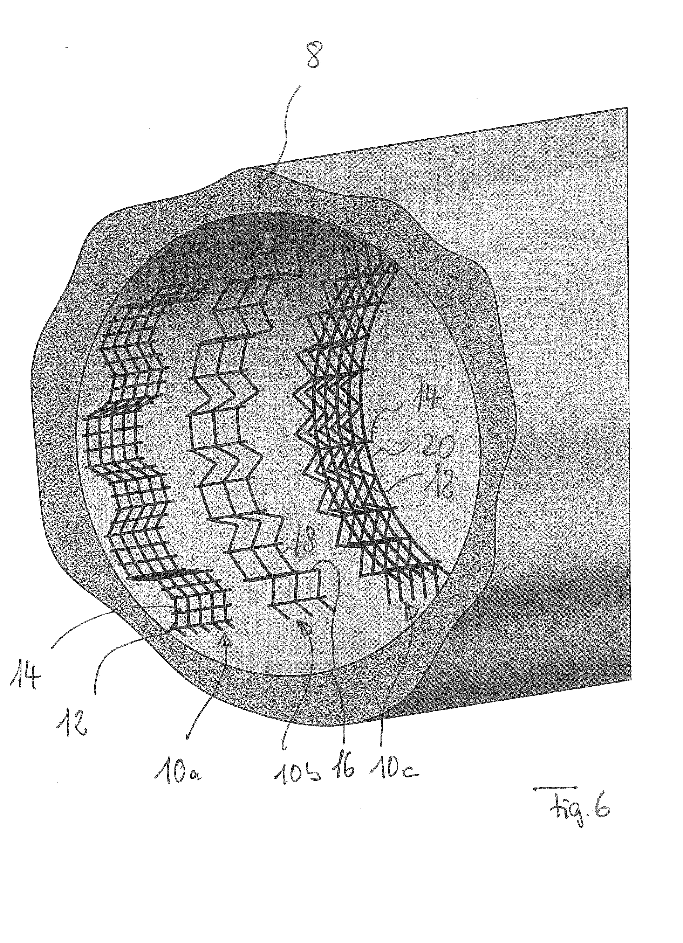

Eine für den erfindungsgemäßen Spritzbeton geeignete Bewehrung soll vorzugsweise tangential verschiebbar sein, sodass sie die Bewegung während der Komprimierphase mitmachen kann. Dies kann etwa dadurch erzielt werden, dass handelsübliche Bewehrungsmatten in diagonaler Richtung, bzw. windschief zur Tunnelachse verlegt werden. Eine zweite Möglichkeit besteht darin, die Matten in welliger oder Zick-Zack-Form anzufertigen und entsprechend zu verlegen wie in Fig. 6 dargestellt. Eine dritte Möglichkeit besteht etwa darin, die senkrecht zur Tunnelachse verlaufenden Bewehrungsstäbe teleskopartig verschiebbar auszuführen. Das erfindungsgemäße Tunnelausbauelement weist eine Spritzbetonschale auf, die aus einem derartigen Spritzbeton hergestellt ist.

Die Bewehrung ist beispielsweise als Stahlbewehrung ausgeführt.

Die Erfindung wird im Folgenden anhand einiger Figuren näher erläutert. Es zeigen:
Figur 1 einen Teilschnitt durch einen Versuchsaufbau mit einem Ring, in den eine Spritzbetoninnenschale eingebracht wird;
Figur 2 eine Photographie eines Versuchsaufbaus vor dem Herstellen der Spritzbetoninnenschale;
Figur 3 eine Photographie der Herstellung der Spritzbetoninnenschale des Versuchsaufbaus;
Figur 4 ein Spannungs-Stauchungs-Diagramm als Ergebnis eines einaxialen Druckversuchs;
Figur 5 ein Diagramm mit Ergebnissen zur Frühfestigkeit des jungen Spritzbetons und
Figur 6 eine Darstellung von diversen Bewehrungsmöglichkeiten, die der Komprimierbewegung folgen können.

Mit der Erfindung wird ein komprimierbarer Spritzbeton bereit gestellt, der es erlaubt, den Tunnelausbau mittels einer durchgängigen homogenen Spritzbetonschale in einem Arbeitsgang durchzuführen, wobei dieser komprimierbare Spritzbeton beispielsweise beim "neuen österreichischen Tunnelbau" gemäß der NATM verwendbar ist.

Die Betonrezeptur ist so eingestellt, dass durch Zugabe von komprimierbaren Stoffen, beispielsweise Polystyrolschaum oder anderen Luftporen, der nötige Kompensationsraum zum Ausgleich der Verschiebungen bereit gestellt wird. Dieses Kompensationsvermögen soll bei 0,2%-20%, vorzugsweise bei 5% bis 10 % liegen. Um die Duktilität zu erhöhen, werden dem Spritzbeton Stahlfasern oder andere Fasern zugemischt, die beispielsweise zwischen 10 mm und 70 mm, vorzugsweise zwischen 30 mm und 50 mm lang sind und einen Durchmesser von 0,5 mm bis 1,1 mm aufweisen. Eine typische Dosierung liegt im Falle von Stahlfasern zwischen 30 kg/m³ und 40 kg/m³ Spritzbeton. Selbstverständlich können zur Bewehrung auch andere Fasermaterialien verwendet werden, die entsprechend ihrer Dichte und Festigkeit dosiert werden. Der erhöhte Luftporenanteil kann auch durch geeignete Wahl von Luftporenmitteln und/oder Mikrohohlkugeln eingestellt werden, um die erfindungsgemäße Komprimierbarkeit bereit zu stellen.

Es können sowohl Fasern mit angebogenen Endhaken (hook-end) als auch mit abgeplatteten Endhaken (flat-end) zum Einsatz kommen. Derartige Fasern lassen sich gut einmischen und haben geringe Rückprallwerte und sind sehr leistungsfähig.

Hinzu kommen die üblichen Zusatzmittel, insbesondere Luftporenbildner, Fließmittel und Beschleuniger, die so eingestellt werden, dass eine Frühfestigkeitsklasse bis zu J2, eine 7-Tage-Festigkeit von mindestens 10 MPa und eine 28-Tage-Normfestigkeit (gemäß RiLi Spritzbeton des ÖVBB bzw. EN 12390) von mindestens 15 MPa erreicht werden.

Bei einigen Vorversuchen wurde abgeklärt, ob eine derartige Mischung überhaupt gepumpt werden kann. Es zeigte sich, dass eine Kolbenpumpe mit einem 65 mm Schlauch für eine derartige Betonrezeptur gut geeignet ist.

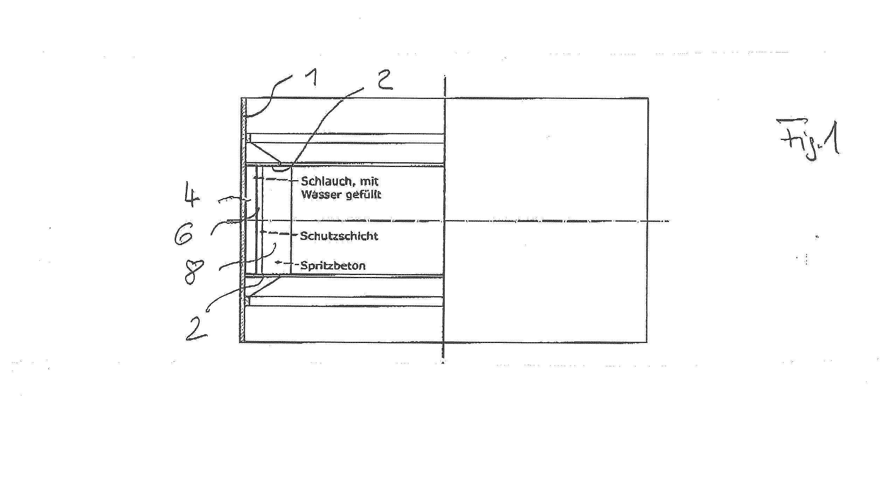

Um die Eignung dieses Spritzbetons zu testen, wurde ein Großversuch durchgeführt, bei dem eine etwa 1 m breite und 30 cm dicke Spritzbetonschicht in einen Ring eingebracht wird. Dieser Ring ist in Figur 1 dargestellt. Demgemäß besteht der Ring 1 aus Stahl und hat an seiner Innenumfangsfläche so genannte Begrenzungsstege 2, die in Tunnelrichtung die vordere und hintere Stirnfläche des einzubringenden Spritzbetonrings begrenzen.

In den Bereich zwischen den beiden Begrenzungsstegen 2 wird ein ringförmiger Schlauch 4 eingebracht, der über eine Pumpe mit Druckmittel, beispielsweise Wasser gefüllt werden kann, um die druckhaften Gebirgsverhältnisse zu simulieren. Um eine Beschädigung des Schlauchs zu vermeiden, ist dieser mit einer Schutzschicht 6 versehen, auf die dann die Spritzbetoninnenschale 8 aufgebracht wird. Diese Spritzbetoninnenschale 8 wird dann durch Druckbeaufschlagung des Schlauchs 4 mittels Druckmittel beaufschlagt, wobei die Kraftübertragung durch Flächenpressung erfolgt, da der Schlauch bündig den Spritzbetonring auskleidet.

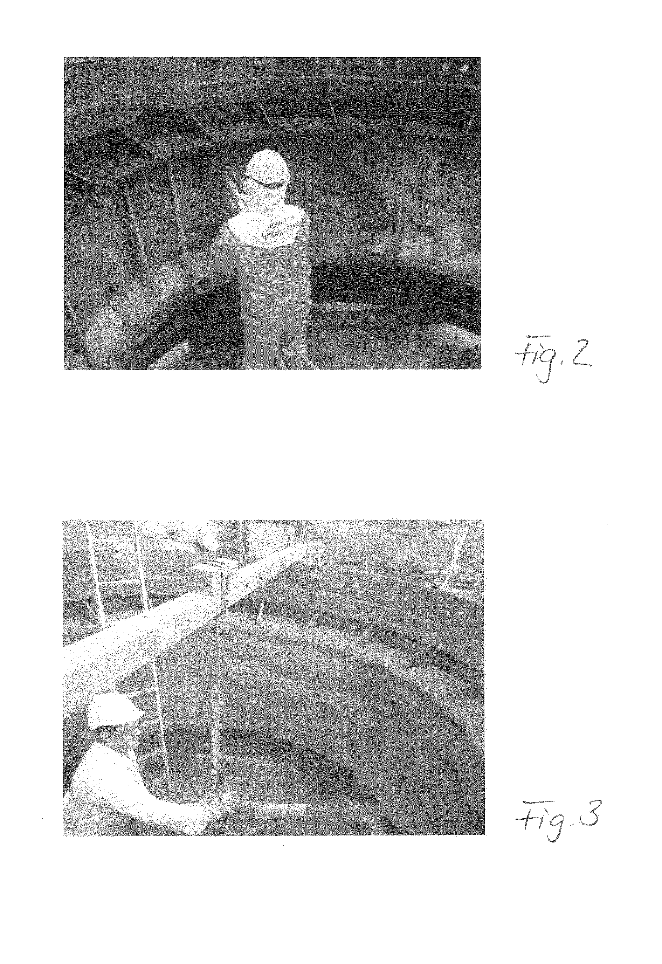

Figur 2 zeigt eine Fotographie dieses Versuchsaufbaus; man erkennt deutlich die beiden Begrenzungsstege und die auf den Schlauch aufgebrachte Schutzschicht, die beispielsweise aus einem mit Textilglasgitter verstärktem Leichtputz besteht. Der Spritzbeton wurde über eine Kolbenpumpe aufgebracht, wobei der Schlauchdurchmesser etwa 65 mm betrug. Bei dem Versuch wurde eine Förderleistung von 4.5 m³/h mit einer Beschleunigerzugabe von beispielsweise 6% auf die Zementmenge bezogen erreicht.

Figur 3 zeigt den Versuchsaufbau, nachdem die Spritzbetoninnenschale nahezu vollständig ausgebildet ist. Etwa drei Stunden nach Betonierende wird der Stahlring mit Hilfe eines Autokrans aufgestellt und Bireflextargets in die Spritzbetonschale eingebracht, um Konvergenzen mit einem Theodoliten messen zu können. Im Anschluss wird dann zur Simulation des Gebirgsdrucks der Schlauch mit Druckmittel beaufschlagt, wobei zur Druckbeaufbringung geeignete Pumpen oder Kompressoren verwendet werden können.

Während des Versuchs wurde der Druck zwischen 3 bar und 11 bar eingestellt, wobei mehrere dieser Druckerhöhungsvorgänge zyklisch durchgeführt wurden, wobei der Druck abgesenkt, und dann wieder erhöht wird. Nach einigen dieser Druckzyklen kam es zu einem Scherbruch im Sohlebereich, da in dieser Versuchsanordnung noch keine Mattenbewehrung eingesetzt worden war.

Während des Großversuches wurden parallel Spritzkisten hergestellt und in einer Prüfvorrichtung mit einer einachsigen Druckbelastung beaufschlagt. Die Ergebnisse dieser einaxialen Druckversuche sind in der unten eingefügten Tabelle aufgelistet, wobei für das Betonalter von 4 Tagen, 11 Tagen und 28 Tagen die Druckfestigkeit, der E-Modul, der V-Modul und die Stauchung ermittelt wurden.

| Betonalter | Versuchs- | Druckfestigkeit | E-Modul | V-Modul | Stauchung |
|---|---|---|---|---|---|
| | Nr. | [MPa] | [GPa] | [GPa] | [%] |
| 4 Tage | 1 | 3,4 | - | 4,0 | 0,30 |
| | 3 | 3,4 | - | 4,0 | 0,34 |
| | 4 | 3,4 | - | 1,0 | 0,26 |
| 11Tage | 1 | 11,5 | - | 5,0 | 0,50 |
| | 3 | 13,8 | 11,5 | 11,0 | 0,19 |
| 28 Tage | 1 | 21,3 | 19,5 | 19,0 | 0,12 |
| | 3 | 21,8 | 18,0 | 17,0 | 0,19 |
| | 4 | 21,8 | 16,0 | 15,0 | 0,22 |

### Ergebnisse der einaxialen Druckversuche

Wie dieser Tabelle entnehmbar ist, besitzt der erfindungsgemäße komprimierbare Spritzbeton eine 4-Tage-Druckfestigkeit von etwa 3 bis 5 MPa.

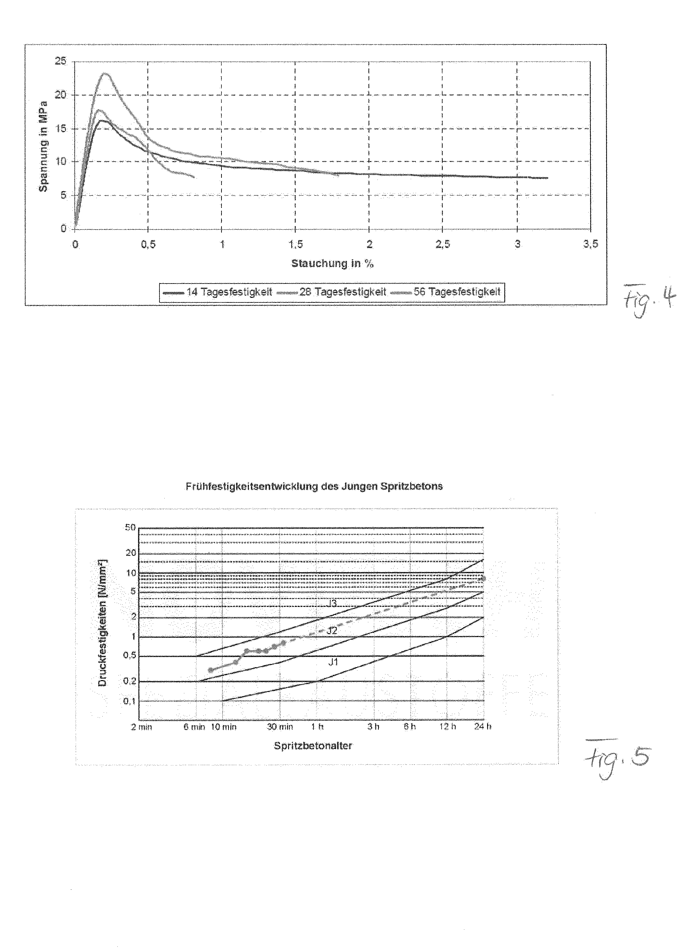

Figur 4 zeigt ein Ergebnis eines weiteren Laborversuchs, wobei in einem ebenfalls einaxialen Druckversuch die Stauchung einer Probe des erfindungsgemäßen Spritzbetons in Abhängigkeit von der Druckspannung erfasst wurde. Man erkennt, dass die 14-Tagesfestigkeit (untere Kurve), die 28-Tagesfestigkeit (mittlere Kurve) und die 56-Tagesfestigkeit (obere Kurve) innerhalb des vorgegebenen Rahmens liegen.

Figur 5 zeigt schließlich das Ergebnis eines weiteren Vorversuchs, mit dem die Frühfestigkeit des jungen Spritzbetons (J2) getestet wurde. Man erkennt aus diesem Diagramm, dass die beim erfindungsgemäßen Beton gemessene Frühfestigkeit die Vorgaben der Frühfestigkeitsklasse J2 erreichen kann.

Durch den Großversuch und die erläuterten Laborversuche wurde nachgewiesen, dass die projektierte 28-Tage-Festigkeit ohne weiteres erreicht werden kann. Was die Komprimierbarkeit angeht, so liegt die maximal erreichte Stauchung bei der Annahme einer querdehnungsbehinderten Belastung bei etwa 4.7%. Während der durchgeführten Laborversuche und während des Großversuchs fiel die gute Restdruckfestigkeit des Spritzbetons positiv auf. Dieser ist mit einem "Selbstheilungseffekt" ausgestattet, mit dem er Störungen, die er im jungen Alter erfährt, durch eine langsamere Hydratation wieder selbst "heilen" kann.

Figur 6 zeigt stark schematisiert unterschiedliche Bewehrungsmöglichkeiten für den Spritzbetonring 8. Wie erläutert, soll die Bewehrung 10 so ausgeführt sein, dass sie während der Komprimierphase des Spritzbetons einen Ausgleich in Tangentialrichtung und/oder in Umfangsrichtung des Spritzbetonrings 8 ermöglicht. Bei den beschriebenen Ausführungsbeispielen ist die Bewehrung 10 als Stahlbewehrung ausgebildet. Prinzipiell können jedoch auch andere Materialien mit entsprechender Festigkeit verwendet werden. Mit dem Bezugszeichen 10a ist in Figur 6 eine Bewehrung 10 gekennzeichnet, die matten- oder gitterförmig ausgebildet ist, wobei in Umfangsrichtung eine Wellen- oder Zickzackstruktur ausgeführt ist, wobei jedes Wellental oder jeder Wellenberg in etwa trapezförmig ausgeführt ist, wobei diese Wellstruktur durch eine Vielzahl von in Umfangsrichtung angeordneten Umfangsstäben 12 und achsparallel angeordneten Axialstäben 14 gebildet ist. Die Wellen- oder Zickzackstruktur wird dabei durch ein entsprechendes Biegen der Umfangsstäbe 12 erzielt, wobei diese Wellenstruktur den Tangentialausgleich ermöglicht. Die Axialstäbe stabilisieren die parallel verlaufenden Umfangsstäbe 12.

Mit dem Bezugszeichen 10b ist eine alternative Lösung gezeigt, bei der die Bewehrung 10 mit etwa dachförmig ausgewölbten Scheiteln 16 ausgeführt ist, wobei zwischen jeweils benachbarten Scheiteln 16 jeweils ein ebener Abschnitt 18 angeordnet ist. Das heißt, die etwa trapezförmigen Auswölbungen des mit den Bezugszeichen 10a bezeichneten Ausführungsbeispiels sind durch etwa dreieckförmige Auswölbungen ersetzt. Der Parallelabstand der Umfangsstäbe 12 ist deutlich größer als beim zuvor beschriebenen Ausführungsbeispiel gewählt. Selbstverständlich kann dieser Axialabstand in Abhängigkeit von den Tangentialkräften variiert werden.

Mit dem Bezugszeichen 10c ist eine Lösung gezeigt, bei der die Bewehrung 10 eine Vielzahl von ringförmig gebogenen Ringstäben 20 hat, die in Achsrichtung des Spritzbetonrings 8 nebeneinander liegend angeordnet sind und etwa koaxial zur Spritzbetonringachse verlaufen. Die ringförmigen Ringstäbe 20 sind dabei wiederum über Axialstäbe 14 miteinander verbunden. Radial außerhalb dieser Ringkonstruktion ist wieder eine Wellstruktur angesetzt, die aus einer Vielzahl von zick-zack-förmig gebogenen Umfangsstäben 12 besteht, wobei der Abstand der Umfangsstäbe 12 in etwa dem Abstand der Ringstäbe 20 entspricht. Dabei sind auch die Umfangsstäbe 12 entlang der Axialstäbe 14 miteinander verbunden. Prinzipiell ist es auch möglich, die Strukturen gemäß den Bezugszeichen 10a, 10b an die Ringstäbe 20 gemäß Figur 6 anzusetzen.

Ein allen Ausführungsbeispiel gemeinsames Merkmal der Bewehrungsstäbe besteht darin, dass durch die in Umfangsrichtung gekrümmten Abschnitte, die wellenförmig, zick-zack-förmig oder mit wechselnden Geometrien ausgeführt sein können, eine Tangentialverschiebung während der Komprimierung erfolgen kann. Alternativ zu derartigen eingelegten Bewehrungen können auch teleskopierbare Bewehrungen vorgesehen sein, über die ein Tangentialausgleich erfolgt.

Die Anmelderin behält sich vor, auf die Geometrie in der Bewehrung zum Ausgleich von Tangentialbewegungen des Spritzbetonrings oder Spritzbetonbauteils einen eigenen unabhängigen Anspruch zu richten. Dieser unabhängige Patentanspruch kann beispielsweise die unter Anspruch 6 explizit enthaltenen Merkmale aufweisen (ohne Rückbezug).

Offenbart sind ein Spritzbeton und ein aus einem derartigen Spritzbeton hergestelltes Tunnelausbauelement, wobei der Spritzbeton komprimierbar ausgeführt ist.

### Bezugszeichenliste:

- 1: Stahlring
- 2: Begrenzungssteg
- 4: Schlauch
- 6: Schutzschicht
- 8: Spritzbetonring
- 10: Bewehrung
- 12: Umfangsstab
- 14: Axialstab
- 16: Scheitel
- 18: ebener Abschnitt
- 20: Ringstab

## Patentansprüche

1. Spritzbeton für den Tunnelbau mit zumindest Anteilen an Zement, Zusatzstoffen, Zusatzmitteln, Wasser und Gesteinskörnungen, **gekennzeichnet durch** einen Anteil an komprimierbarem Werkstoff, der derart gewählt ist, dass die Komprimierbarkeit des Spritzbetons deutlich unter 50%, etwa im Bereich zwischen 0,2% und 20%, vorzugsweise bei 5% bis 10% liegt.

2. Spritzbeton nach Patentanspruch 1, wobei der komprimierbare Werkstoff aus Polystyrolteilchen (Kügelchen, Flocken, etc.) besteht.

3. Spritzbeton nach Patentanspruch 1, wobei der komprimierbare Werkstoff ein Polymerschaum, vorzugsweise Polystyrolschaum ist.

4. Spritzbeton nach Patentanspruch 1, wobei die Komprimierbarkeit auch durch Einbringung von Luftporen oder Mikrohohlkugeln erreicht ist.

5. Spritzbeton nach Patentanspruch 1-4, mit einem Anteil an Stahlfasern oder anderen Fasern.

6. Spritzbeton nach Patentanspruch 5, wobei der Anteil an Stahlfasern zwischen 10 und 70 kg/m³ liegt.

7. Spritzbeton nach Patentanspruch 5, wobei der Anteil an anderen Fasern (Glas, Kunststoff. Etc.) entsprechend dem Volumen im Falle von Stahlfasern eingestellt ist.

8. Spritzbeton nach einem der vorhergehenden Patentansprüche, bei dem eine spezielle Bewehrung eingelegt ist, die einer Tangentialbewegung des Spritzbetons während der Kompressionsphase folgen kann.

9. Spritzbeton nach Patentanspruch 6, bei dem die Bewehrung aus Baustahlmatten besteht, die in diagonaler oder windschiefer Richtung zur Tunnelachse verlegt werden.

10. Spritzbeton nach Patentanspruch 6, bei dem gewellte oder Zick-Zack-geformte Matten als Bewehrung verlegt sind.

11. Spritzbeton nach Patentanspruch 6, bei dem zur Tunnelachse senkrechte Bewehrungsstäbe teleskopartig verschiebbar ausgeführt sind.

12. Spritzbeton nach einem der vorhergehenden Patentansprüche, wobei die Zusatzmittel Beschleuniger enthalten.

13. Spritzbeton nach einem der vorhergehenden Patentansprüche, dem andere komprimierbare Werkstoffe, wie beispielsweise PU zugesetzt werden.

14. Spritzbeton nach einem der vorhergehenden Patentansprüche, wobei bei der Mischung des Spritzbetons flüssiger Polymerschaum zugesetzt wird.

15. Spritzbeton nach einem der Patentansprüche 5 bis 14, wobei die Fasern zwischen 10 mm bis 70 mm lang sind und einen Durchmesser zwischen 0.5 mm bis 1,1 mm aufweisen.

16. Spritzbeton nach einem der Patentansprüche 5 bis14, wobei spritzbare Fasern mit einer Länge von 10 mm bis 70 mm eingesetzt sind.

17. Tunnelausbauelement hergestellt aus einem Spritzbeton nach einem der vorhergehenden Patentansprüche.
